# FASCICULE DE BREVET EUROPEEN

(11) **EP 1 653 530 B1**
(45) Date de publication et mention de la délivrance du brevet: **27.04.2016**
(21) Numéro de dépôt: 05291787.9
(22) Date de dépôt: 26.08.2005
(51) Int. Cl.: H01M 2/00

(54) **Accumulateur présentant deux bornes de sortie de courant sur une paroi de son conteneur**
Akkumulator mit zwei Stromanschlüssen auf einer Behälterseite
Secondary battery with two current terminals on a side of the casing

(30) Priorité: 07.09.2004 FR 0409451
(43) Date de publication de la demande: 03.05.2006
(73) Titulaire: SAFT, 93170 Bagnolet (FR)
(72) Inventeur: Rigobert, Gérard, 33370 Fargues St Hilaire (FR); Gilabert, Claude, 33290 Le Pian Medoc (FR); Jonac, Philippe, 33170 Gradignan (FR); Ligeois, Dominique, 86340 Nouaille Maupertuis (FR)
(74) Mandataire: Hirsch & Associés

(56) Documents cités:
- US-A- 6 007 944
- US-B1- 6 268 079
- PATENT ABSTRACTS OF JAPAN vol. 1996, no. 10, 31 octobre 1996 (1996-10-31) & JP 08 162092 A (SANYO ELECTRIC CO LTD), 21 juin 1996 (1996-06-21)
- PATENT ABSTRACTS OF JAPAN vol. 2003, no. 12, 5 décembre 2003 (2003-12-05) & JP 2003 257411 A (MATSUSHITA ELECTRIC IND CO LTD), 12 septembre 2003 (2003-09-12)
- PATENT ABSTRACTS OF JAPAN vol. 1997, no. 10, 31 octobre 1997 (1997-10-31) & JP 09 161763 A (SONY CORP), 20 juin 1997 (1997-06-20)
- PATENT ABSTRACTS OF JAPAN vol. 2000, no. 19, 5 juin 2001 (2001-06-05) & JP 2001 052681 A (HITACHI MAXELL LTD), 23 février 2001 (2001-02-23)
- PATENT ABSTRACTS OF JAPAN vol. 1999, no. 02, 26 février 1999 (1999-02-26) & JP 10 308206 A (ELNA CO LTD), 17 novembre 1998 (1998-11-17)

## Description

La présente invention se rapporte à un accumulateur présentant deux bornes de sortie de courant sur une paroi d'extrémité de son conteneur. Elle s'étend en outre au procédé de fabrication d'un tel accumulateur.

Un générateur électrochimique ou accumulateur (ces deux termes étant équivalents, on utilisera le terme d'accumulateur dans la présente description) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé. Les bornes de sortie de courant positive et négative peuvent être fixées soit sur les parois de faces opposées du conteneur de l'accumulateur soit sur la paroi d'une même face du conteneur.

Plusieurs accumulateurs peuvent être connectés ensemble en série ou en parallèle ou en une configuration série / parallèle en fonction de la tension nominale de fonctionnement du consommateur électrique et de la quantité d'énergie (Ampère.heure) qu'il est prévu de fournir à ce consommateur. Les accumulateurs sont alors placés dans un boîtier commun et l'on désigne généralement l'ensemble du boîtier et de la pluralité d'accumulateurs qu'il renferme par le terme de module ou de monobloc. Les accumulateurs d'un monobloc sont connectés entre eux par des barrettes métalliques, en cuivre par exemple, désignées également par le terme de « bus bar ».

Dans le cas particulier des accumulateurs cylindriques de type lithium ion, les électrodes sont assemblées, spiralées pour former un faisceau électrochimique et introduites dans un conteneur métallique de forme cylindrique. Les bornes de sortie de courant sont souvent situées sur des faces d'extrémités opposées du conteneur. Cette disposition ne facilite pas l'assemblage des accumulateurs en monobloc car les bornes situées sur les faces arrière des accumulateurs sont alors difficiles d'accès et cette disposition requiert un câblage des bornes des accumulateurs plus complexe que lorsque les bornes de sortie de courant sont situées sur la paroi d'une même extrémité.

La disposition des bornes sur une même paroi d'une extrémité du conteneur d'un accumulateur lithium ion cylindrique facilite le montage / démontage des accumulateurs. Les bornes de sortie de courant sont situées, en général sur le couvercle de l'accumulateur, elles sont constituées de matériaux de natures différentes, habituellement du cuivre pour la borne négative et de l'aluminium pour la borne positive (pour la technologie des accumulateurs lithium ion). La connexion entre une borne et une barrette est réalisée soit par soudage soit par vissage. La connexion d'une borne en cuivre sur une barrette en cuivre, par vissage ou par soudage est réalisée dans les deux cas de façon satisfaisante car le cuivre possède une rigidité mécanique suffisante pour assurer une bonne surface de contact entre la borne et la barrette et d'autre part, la soudure cuivre sur cuivre ne pose pas de problème particulier.

En revanche, la connexion d'une borne en aluminium sur une barrette en cuivre, par vissage ou par soudage ne donne pas de résultats satisfaisants. En effet, la borne positive en aluminium ne possède pas une rigidité mécanique suffisante pour garantir une bonne surface de contact avec la barrette en cuivre ; le filetage de la borne en aluminium peut être en outre endommagé si le couple de serrage appliqué à l'écrou vissé sur la borne est trop important. D'autre part, le soudage entre l'aluminium et le cuivre est difficile de par la nature de la structure métallique des deux matériaux et aussi de par leur différence de températures de fusion.

Il existe donc un besoin d'un accumulateur présentant deux bornes de sortie de courant en cuivre situées sur une même paroi du conteneur de l'accumulateur.

A cet effet, l'invention concerne un accumulateur comprenant un conteneur en aluminium et deux bornes de sortie de courant en cuivre situées sur une même paroi du conteneur, chacune des bornes de sortie de courant présentant un épaulement, une première borne de sortie de courant étant fixée sur la paroi par soudage laser, l'épaulement de la première borne de sortie de courant étant recouvert par une rondelle en nickel adaptée à transmettre l'énergie du laser.

Selon les modes de réalisation, l'accumulateur présente une ou plusieurs des caractéristiques suivantes :
- une seconde borne est fixée à travers la paroi par sertissage.
- la borne sertie présente un fluage axial de matière.
- la borne sertie présente au moins un joint en poly-éther-imide.
- la première borne est la borne positive et la seconde borne est la borne négative.

Selon les applications, le conteneur de l'accumulateur est de forme cylindrique ou prismatique ; l'accumulateur est de type lithium-ion, nickel cadmium ou nickel métal hydrure.

L'invention concerne aussi un procédé de fabrication d'un accumulateur comprenant un conteneur en aluminium et deux bornes de sortie de courant en cuivre situées sur une même paroi du conteneur, chacune des bornes de sortie de courant présentant un épaulement, dans lequel une première borne est fixée par soudage laser, ledit procédé comprenant les étapes consistant à :
- placer l'épaulement de la première borne sur la paroi ;
- recouvrir l'épaulement par une rondelle en nickel adaptée à transmettre l'énergie du laser ;
- souder au laser l'épaulement sur la paroi.

Selon une caractéristique, le rayon laser est dirigé perpendiculairement à la surface de la rondelle.

Selon les applications, la première borne fixée par soudage laser est la borne positive ; l'accumulateur est cylindrique et de type lithium-ion.

Selon un mode de réalisation, la seconde borne est fixée par sertissage par un procédé comprenant les étapes consistant à :
- pratiquer une ouverture à travers la paroi ;
- placer au moins un joint autour de l'ouverture de la paroi ;
- placer une rondelle d'appui sur le joint ;
- insérer la seconde borne à travers le au moins un joint et la rondelle ;
- fixer la borne par sertissage avec un fluage axial de matière.

Selon une caractéristique, une partie de la surface du joint adjacente à la paroi présente une rainure apte à s'enfoncer dans la paroi au cours du sertissage.

Selon les applications, la borne fixée par sertissage est la borne négative ; le joint est en poly-éther-imide ; l'accumulateur est cylindrique et de type lithium-ion.

D'autres caractéristiques et avantages de l'invention apparaîtront à la lecture de la description qui suit, donnée à titre d'exemple et en référence aux figures qui montrent :
- Figure 1, une vue en coupe longitudinale d'un accumulateur cylindrique lithium ion étanche, muni de deux bornes en cuivre selon l'invention.
- Figure 2, une vue en section longitudinale d'une borne de sortie de courant fixée au couvercle par soudage.
- Figure 3A, une vue en section longitudinale d'une borne de sortie de courant fixée au couvercle par sertissage, selon une technique de l'art antérieur.
- Figure 3B, une vue en section longitudinale d'une borne de sortie de courant fixée au couvercle par sertissage selon l'invention. Les traits en pointillés représentent le contour de la partie déformée de la borne après sertissage.
- Figure 3C, une vue en section longitudinale d'une borne de sortie de courant fixée au couvercle par sertissage selon une variante de réalisation de l'invention.

L'invention concerne un accumulateur comprenant un conteneur en aluminium et deux bornes de sortie de courant en cuivre situées sur une même paroi du conteneur, chacune des bornes de sortie de courant présentant un épaulement. Une première borne est fixée sur la paroi par soudage laser. Une seconde borne peut être fixée à travers la paroi par sertissage avec un fluage axial de matière.

L'invention facilite les opérations de maintenance des accumulateurs connectés au sein d'un module. Elle évite un endommagement des connexions provoqué par des vissages-dévissages répétés des écrous vissés sur les bornes dans le cas d'un système de connexion aux barrettes par vis-écrou.

L'invention va être décrite dans un mode préféré de réalisation donné à titre d'exemple en référence à un accumulateur lithium ion cylindrique, bien que l'invention puisse s'appliquer à d'autres technologies d'accumulateurs.

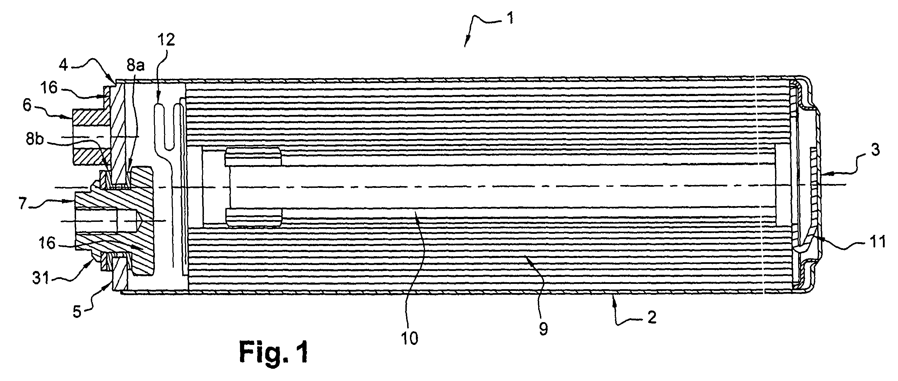

La Figure 1 montre une coupe longitudinale d'un accumulateur lithium ion cylindrique étanche selon l'invention.

L'accumulateur 1 comprend un conteneur en aluminium présentant une paroi cylindrique 2 obturée par un fond 3 à une extrémité et ouverte à l'autre extrémité 4. Un couvercle 5 en aluminium est placé sur l'extrémité ouverte. Il supporte les bornes de sortie de courant 6 et 7.

Les bornes de sortie de courant sont en cuivre, de préférence recouvert d'étain lorsque la connexion à une barrette métallique est réalisée par soudage. Elles sont en cuivre, de préférence recouvert d'étain ou d'argent lorsque la connexion à une barrette métallique est réalisée par vissage. Le cuivre peut aussi être recouvert de nickel pour éviter son oxydation.

Une première borne de sortie de courant, dans l'exemple la borne positive 6, est soudée sur le couvercle par laser. Une seconde borne de sortie de courant, dans l'exemple la borne négative 7, passe à travers le couvercle. Elle est fixée sur celui-ci par sertissage avec fluage axial de matière 31 de la borne. Deux joints 8a et 8b isolent électriquement la borne de sortie de courant négative 7 du couvercle. Le faisceau électrochimique 9, constitué par un enroulement d'électrodes positives, négatives et de séparateurs, est disposé autour d'un axe creux 10 qui sert de cheminée de gaz. Une connexion plane 11 raccorde l'électrode positive du faisceau à la paroi du fond du conteneur, les parois du conteneur étant électriquement conductrices avec le couvercle. Une connexion plane 12 raccorde l'électrode négative du faisceau à la borne de sortie de courant négative.

Selon un mode de mise en oeuvre, on utilisera la paroi d'une des extrémités du conteneur cylindrique, de préférence le couvercle, comme support pour fixer les deux bornes de sortie de courant et on utilisera le fond du conteneur cylindrique, comme emplacement pour un dispositif de sécurité apte par exemple à libérer la surpression à l'intérieur du conteneur et/ou apte à couper la circulation du courant électrique dans le circuit.

L'invention est donc appropriée à toutes les technologies connues d'accumulateurs lithium ion (e.g. cathode à base d'oxydes lithiés de métaux de transition Ni, Co ou Mn et anode à base de carbone ou de Li₄Ti₅O₁₂,), pour lesquelles on recherche des solutions visant à améliorer la sécurité de l'utilisateur lorsque l'accumulateur fonctionne accidentellement hors des conditions nominales.

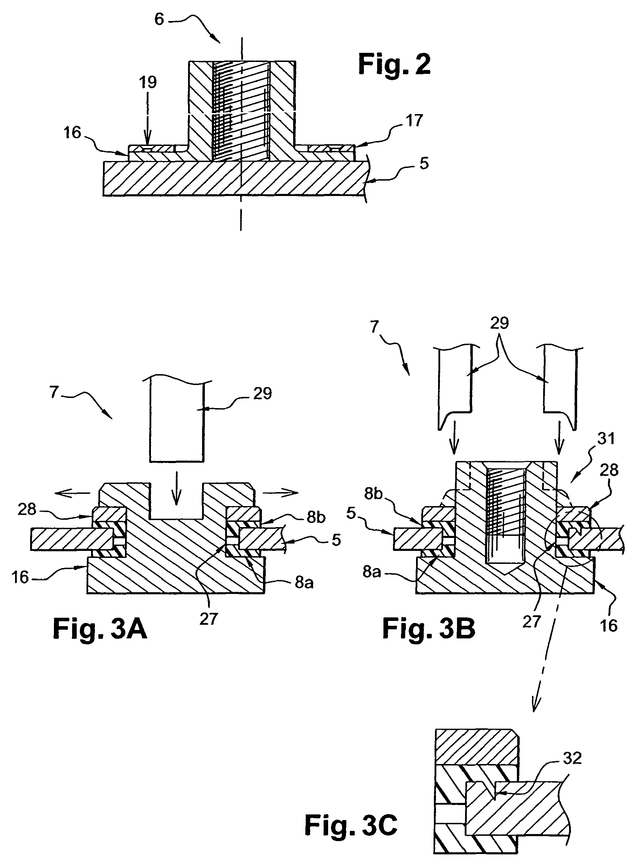

Le mode de fixation par soudage de la borne de courant positive sur la surface de la paroi du couvercle est maintenant décrit en référence à la Figure 2.

La borne 6 a la forme d'un pion de section ronde qui peut être muni d'un filetage à sa surface. Le pion présente à sa base un changement brusque de sa section, que l'on désignera dans la suite par le terme d'épaulement 16 et qui sert de surface d'appui sur la paroi du couvercle 5.

L'opération de soudage est réalisée par émission d'un rayon laser continu d'une puissance de 2kW pendant une durée suffisante pour permettre la soudure. Selon un mode préféré de réalisation, le rayon laser est dirigé perpendiculairement à la surface d'appui de la borne selon la direction représentée par la flèche 19. Un angle d'impact du rayon laser par rapport à la paroi différent de 90° peut aussi être envisagé.

Une rondelle en nickel 17 est placée sur l'épaulement. La soudure de la borne sur le couvercle au moyen d'un laser par impact direct du rayon laser sur l'épaulement est peu efficace. En effet, la surface en cuivre de l'épaulement réfléchit le rayon laser et l'énergie thermique fournie par le rayon laser n'est pas transmise à la surface d'appui de la borne contre la paroi du couvercle. La rondelle a pour fonction de transmettre l'énergie thermique du rayon laser à la surface d'appui de la borne contre la paroi du couvercle.

L'épaisseur de l'épaulement 16 de la borne 6 est d'environ 0,8 mm. L'épaisseur de la rondelle en nickel 17 est d'environ 0,5 mm.

La borne pourrait être fixée sous la paroi du couvercle, de telle façon que l'épaulement prenne appui sur la face interne de la paroi du couvercle et que la borne traverse la paroi du couvercle par une ouverture pratiquée dans la paroi du couvercle. Ce mode de réalisation ne sort pas du cadre de l'invention.

Le mode de fixation par sertissage de la borne de courant négative à travers la paroi est maintenant décrit en référence aux Figures 3B et 3C. La Figure 3A ne représente pas l'invention mais un mode de fixation par sertissage selon l'art antérieur. Le sertissage consiste à appliquer une pression sur une pièce, qui entraîne sa déformation contre une autre pièce afin d'assurer une connexion mécanique entre ces deux pièces. Le sertissage permet d'assujettir deux pièces sans soudure. Ce procédé, appliqué à la fixation d'une borne de courant sur la paroi du couvercle d'un accumulateur, garantit d'une part un blocage axial de la borne, c'est-à-dire le long de son axe longitudinal et d'autre part un blocage radial, c'est-à-dire perpendiculairement à son axe longitudinal, l'axe longitudinal de la borne étant défini comme étant l'axe traversant sa plus grande longueur.

L'assemblage de la borne de sortie de courant négative à travers le couvercle est réalisé de la façon suivante.

On réalise une ouverture circulaire à travers la paroi du couvercle 5. On place autour de cette ouverture un joint intérieur 8a monté en contact avec la face intérieure de la paroi du couvercle. On place autour de l'ouverture un joint extérieur 8b monté en contact avec la face extérieure de la paroi du couvercle. Dans cet exemple, les deux joints sont identiques. Les joints sont choisis dans un matériau élastique, isolant électrique, de dureté de préférence légèrement supérieure à la dureté du matériau du couvercle. On préférera le poly-éther-imide (PEI). L'épaisseur des joints est calculée de façon à ce que une fois ceux-ci mis en place et le sertissage effectué, un jeu de montage 27 soit présent entre les joints. La présence de ce jeu permet d'absorber les variations de dimensions du joint ou de la borne pouvant se produire durant le fonctionnement de l'accumulateur sous l'effet de la chaleur. Ce jeu permet également d'absorber une légère augmentation de la force de compression mise en oeuvre pour le sertissage. Sans ce jeu, une augmentation de la pression de sertissage pourrait endommager le joint.

Une rondelle d'appui 28, de mêmes diamètres intérieur et extérieur que le joint extérieur 8a, est placée sur ce dernier. Au cours du sertissage, sa fonction est de servir de butée au fluage de matière de la borne et de transmettre la force de pression au joint extérieur 8a. Toute autre plaque d'appui est aussi envisageable. La rondelle peut être en acier.

La borne, qui a une forme de pion de section ronde et présente à sa base un épaulement 16 dont le diamètre est au moins égal au diamètre extérieur des joints 8a et 8b, est insérée à travers les diamètres internes des joints et de la rondelle 28. L'épaulement constitue une surface d'appui du pion contre la surface intérieure du joint intérieur 8b, c'est-à-dire la surface de ce joint exposée à l'intérieur du conteneur de l'accumulateur.

Le sertissage est réalisé en écrasant, à l'aide d'un outil 29, une portion de l'extrémité du pion opposée à l'épaulement contre la surface de la rondelle métallique. La portion écrasée a la forme d'un anneau 31. Le sertissage crée un fluage axial de matière en direction de la rondelle. La matière déplacée par sertissage vient en butée contre la rondelle empêchant ainsi le pion de coulisser dans le sens axial.

Le blocage du pion s'effectue également dans le sens radial car sous l'effet de la compression dans le sens axial, les joints se déforment dans le sens radial, absorbant ainsi le jeu éventuel entre le diamètre du pion et le diamètre intérieur des joints.

Le procédé de sertissage par fluage de matière dans le sens axial est donc bien adapté à compenser les jeux résultant de l'assemblage de pièces dont les tolérances ont pu fluctuer au cours de leur usinage.

Dans un mode de réalisation préféré de l'invention, la surface du joint extérieur en contact avec la paroi du couvercle est munie d'une nervure circulaire 32 comme le montre la Figure 3C. Sous l'effet de la pression, la nervure circulaire est apte à s'enfoncer dans la paroi du couvercle car la dureté du matériau du joint est supérieure à la dureté de l'aluminium du couvercle. L'étanchéité entre le joint et la paroi du couvercle est ainsi améliorée. Le poly-éther-imide (PEI) peut être utilisé de manière avantageuse dans ce mode de réalisation car il présente une dureté voisine ou légèrement supérieure à la dureté de l'aluminium sur une large plage de températures.

La nervure circulaire pourrait se situer sur la face du joint intérieur sans que cet autre mode de réalisation ne sorte du cadre de l'invention.

Le mode de sertissage avec fluage axial de matière présente l'avantage par rapport à un fluage de matière radial (Figure 3A) de ne pas déformer la partie centrale de la borne. Un filetage peut être pratiqué sur la partie centrale de la borne afin d'y fixer une barrette par un système vis/écrou.

La fixation d'une borne par sertissage présente les avantages suivants par rapport à une fixation par vissage.

D'une part, du point de vue industriel, l'assemblage d'une borne par sertissage est plus rapide qu'un assemblage par un système de vissage qui oblige à insérer d'abord un matériau isolant électrique dans l'ouverture du couvercle puis à réaliser un filetage sur ce matériau afin d'y visser la borne.

De plus, la fixation par sertissage offre une meilleure surface de contact entre la borne et la paroi du couvercle qu'une fixation par vissage. L'étanchéité aux gaz générés à l'intérieur de l'accumulateur est par conséquent améliorée.

En outre, la fixation par sertissage présente une meilleure tenue thermique. L'étanchéité de l'accumulateur est moins dégradée par des variations de température ou par un fonctionnement prolongé à haute température.

Le présent mode de réalisation et les figures doivent être considérées comme ayant été présentés à titre illustratif et non restrictif, et l'invention n'est pas censée être limitée aux détails fournis ici mais peut être modifiée en restant dans le cadre de la portée des revendications annexées. En particulier la borne de sortie de courant soudée à la paroi du couvercle peut être la borne négative et la borne de sortie de courant soudée par sertissage à travers le couvercle peut être la borne positive. L'invention s'applique aussi aux accumulateurs de forme prismatique et aux accumulateurs d'autres technologies (Ni-Cd, Ni-MH, etc.)

## Revendications

1. Accumulateur (1) comprenant un conteneur (2) en aluminium et deux bornes de sortie de courant (6, 7) en cuivre situées sur une même paroi (5) du conteneur, chacune des bornes de sortie de courant présentant un épaulement (16), une première borne de sortie de courant étant fixée sur la paroi par soudage laser, l'épaulement de la première borne de sortie de courant étant recouvert par une rondelle en nickel adaptée à transmettre l'énergie du laser.

2. Accumulateur selon la revendication 1, dans lequel une seconde borne (7) est fixée à travers la paroi par sertissage.

3. Accumulateur selon la revendication 2, dans lequel la borne sertie présente un fluage axial de matière (31).

4. Accumulateur selon la revendication 2 ou 3, dans lequel la borne sertie présente au moins un joint (8a, 8b) en poly-éther-imide.

5. Accumulateur selon l'une des revendications 1 à 4, dans lequel la première borne est la borne positive.

6. Accumulateur selon l'une des revendications 1 ou 5, dans lequel la seconde borne est la borne négative.

7. Accumulateur selon l'une quelconque des revendications 1 à 6, **caractérisé en ce que** la forme de son conteneur est cylindrique.

8. Accumulateur selon l'une quelconque des revendications 1 à 6, **caractérisé en ce que** la forme de son conteneur est prismatique.

9. Accumulateur selon l'une quelconque des revendications 1 à 8, **caractérisé en ce qu'**il est de type lithium-ion.

10. Accumulateur selon l'une quelconque des revendications 1 à 8, **caractérisé en ce qu'**il est de type nickel cadmium.

11. Accumulateur selon l'une quelconque des revendications 1 à 8, **caractérisé en ce qu'**il est de type nickel métal hydrure.

12. Procédé de fabrication d'un accumulateur (1) selon l'une des revendications 1 à 11, comprenant un conteneur (2) en aluminium et deux bornes de sortie de courant en cuivre (6, 7) situées sur une même paroi (5) du conteneur, chacune des bornes de sortie de courant présentant un épaulement (16), dans lequel une première borne (6) est fixée par soudage laser comprenant les étapes consistant à
- placer l'épaulement de la première borne sur la paroi ;
- recouvrir l'épaulement par une rondelle en nickel (17) adaptée à transmettre l'énergie du laser ;
- souder au laser (19) l'épaulement sur la paroi.

13. Procédé de fabrication d'un accumulateur selon la revendication 12, dans lequel le rayon laser est dirigé perpendiculairement à la surface de la rondelle.

14. Procédé de fabrication d'un accumulateur selon l'une des revendications 12 à 13, dans lequel la première borne fixée par soudage laser est la borne positive.

15. Procédé de fabrication d'un accumulateur selon l'une des revendications 12 à 14, dans lequel l'accumulateur est cylindrique et de type lithium-ion.

16. Procédé de fabrication d'un accumulateur selon la revendication 12, dans lequel une seconde borne (7) est fixée par sertissage comprenant les étapes consistant à:
- pratiquer une ouverture à travers la paroi ;
- placer au moins un joint (8) autour de l'ouverture de la paroi ;
- placer une rondelle d'appui (28) sur le joint ;
- insérer la seconde borne à travers le au moins un joint et la rondelle ;
- fixer la borne par sertissage avec un fluage axial de matière (31).

17. Procédé de fabrication d'un accumulateur selon la revendication 16, dans lequel une partie de la surface du joint adjacente à la paroi présente une rainure (32) apte à s'enfoncer dans la paroi au cours du sertissage.

18. Procédé de fabrication d'un accumulateur selon la revendication 16 ou 17, dans lequel la seconde borne fixée par sertissage est la borne négative.

19. Procédé de fabrication d'un accumulateur selon l'une des revendications 16 à 18, dans lequel le joint est en poly-éther-imide.

20. Procédé de fabrication d'un accumulateur selon l'une des revendications 16 à 19, dans lequel l'accumulateur est cylindrique et de type lithium-ion.

## Patentansprüche

1. Akkumulator (1), welcher einen Behälter (2) aus Aluminium und zwei Stromausgangsanschlüsse (6, 7) aus Kupfer, die sich auf ein und derselben Wand (5) des Behälters befinden, umfasst, wobei jeder der Stromausgangsanschlüsse einen Bund (16) aufweist, wobei ein erster Stromausgangsanschluss durch Laserschweißen an der Wand befestigt ist, wobei der Bund des ersten Stromausgangsanschlusses von einer Scheibe aus Nickel bedeckt ist, die dafür eingerichtet ist, die Energie des Lasers zu übertragen.

2. Akkumulator nach Anspruch 1, wobei ein zweiter Anschluss (7) durch die Wand hindurch durch Crimpen befestigt ist.

3. Akkumulator nach Anspruch 2, wobei der gecrimpte Anschluss ein axiales Fließen von Material (31) aufweist.

4. Akkumulator nach Anspruch 2 oder 3, wobei der gecrimpte Anschluss wenigstens eine Dichtung (8a, 8b) aus Polyetherimid aufweist.

5. Akkumulator nach einem der Ansprüche 1 bis 4, wobei der erste Anschluss der positive Anschluss ist.

6. Akkumulator nach einem der Ansprüche 1 bis 5, wobei der zweite Anschluss der negative Anschluss ist.

7. Akkumulator nach einem der Ansprüche 1 bis 6, **dadurch gekennzeichnet, dass** die Form seines Behälters zylindrisch ist.

8. Akkumulator nach einem der Ansprüche 1 bis 6, **dadurch gekennzeichnet, dass** die Form seines Behälters prismatisch ist.

9. Akkumulator nach einem der Ansprüche 1 bis 8, **dadurch gekennzeichnet, dass** er vom Typ eines Lithium-Ionen-Akkumulators ist.

10. Akkumulator nach einem der Ansprüche 1 bis 8, **dadurch gekennzeichnet, dass** er vom Typ eines Nickel-Cadmium-Akkumulators ist.

11. Akkumulator nach einem der Ansprüche 1 bis 8, **dadurch gekennzeichnet, dass** er vom Typ eines Nickel-Metallhydrid-Akkumulators ist.

12. Verfahren zur Herstellung eines Akkumulators (1) nach einem der Ansprüche 1 bis 11, welcher einen Behälter (2) aus Aluminium und zwei Stromausgangsanschlüsse aus Kupfer (6, 7), die sich auf ein und derselben Wand (5) des Behälters befinden, umfasst, wobei jeder der Stromausgangsanschlüsse einen Bund (16) aufweist, wobei ein erster Anschluss (6) durch Laserschweißen befestigt wird, die Schritte umfassend, welche aus Folgendem bestehen:
- Anordnen des Bundes des ersten Anschlusses an der Wand;
- Bedecken des Bundes mit einer Scheibe aus Nickel (17), die dafür eingerichtet ist, die Energie des Lasers zu übertragen;
- Laserschweißen (19) des Bundes auf der Wand.

13. Verfahren zur Herstellung eines Akkumulators nach Anspruch 12, wobei der Laserstrahl senkrecht zur Oberfläche der Scheibe gerichtet wird.

14. Verfahren zur Herstellung eines Akkumulators nach einem der Ansprüche 12 bis 13, wobei der durch Laserschweißen befestigte erste Anschluss der positive Anschluss ist.

15. Verfahren zur Herstellung eines Akkumulators nach einem der Ansprüche 12 bis 14, wobei der Akkumulator zylindrisch und vom Typ eines Lithium-Ionen-Akkumulators ist.

16. Verfahren zur Herstellung eines Akkumulators nach Anspruch 12, wobei der zweite Anschluss (7) durch Crimpen befestigt wird, die Schritte umfassend, welche aus Folgendem bestehen:
- Herstellen einer Öffnung durch die Wand hindurch;
- Anordnen wenigstens einer Dichtung (8) um die Öffnung der Wand herum;
- Anordnen einer Stützscheibe (28) auf der Dichtung;
- Einsetzen des zweiten Anschlusses durch die wenigstens eine Dichtung und die Scheibe hindurch;
- Befestigen des Anschlusses durch Crimpen mit einem axialen Fließen von Material (31).

17. Verfahren zur Herstellung eines Akkumulators nach Anspruch 16, wobei ein Teil der Oberfläche der Dichtung, welcher der Wand benachbart ist, eine Einkerbung (32) aufweist, die geeignet ist, sich während des Crimpens in die Wand einzudrücken.

18. Verfahren zur Herstellung eines Akkumulators nach Anspruch 16 oder 17, wobei der durch Crimpen befestigte zweite Anschluss der negative Anschluss ist.

19. Verfahren zur Herstellung eines Akkumulators nach einem der Ansprüche 16 bis 18, wobei die Dichtung aus Polyetherimid ausgebildet ist.

20. Verfahren zur Herstellung eines Akkumulators nach einem der Ansprüche 16 bis 19, wobei der Akkumulator zylindrisch und vom Typ eines Lithium-Ionen-Akkumulators ist.

## Claims

1. An electrochemical cell (1) comprising an aluminum container and two current output terminals (6, 7) made of copper situated on a single wall (5) of the container, each of the current output terminals presenting a shoulder (16), a first current output terminal being fixed onto the wall by laser welding, the shoulder of the first current output terminal being covered by a nickel washer adapted to transmit the laser energy.

2. The cell according to claim 1, in which a second terminal (7) is secured through the wall by crimping.

3. The cell according to claim 2, in which the crimped terminal presents axial displacement of material (31).

4. The cell according to claim 2 or 3, in which the crimped terminal presents at least one gasket (8a, 8b) of polyetherimide.

5. The cell according to one of claims 1 to 4, in which the first terminal is the positive terminal.

6. The cell according to one of claims 1 to 5, in which the second terminal is the negative terminal.

7. The cell according to one of claims 1 to 6, **characterized in that** the shape of its container is cylindrical.

8. The cell according to one of claims 1 to 6, **characterized in that** the shape of its container is prismatic.

9. The cell according to one of claims 1 to 8, **characterized in that** it is of the lithium ion type.

10. The cell according to one of claims 1 to 8, **characterized in that** it is of the nickel cadmium type.

11. The cell according to one of claims 1 to 8, **characterized in that** it is of the nickel metal hydride type.

12. A method of manufacturing a cell (1) according to one of claims 1 to 11 comprising an aluminum container (2) and two current output terminals made of copper (6, 7) situated on a single wall (5) of the container, each of the current output terminals presenting a respective shoulder (16), and in which a first terminal (6) is secured by laser welding comprising the steps consisting in:
- placing the shoulder of the first terminal on the wall;
- covering the shoulder in a washer made of nickel (17) suitable for transmitting laser energy; and
- laser welding (19) the shoulder to the wall.

13. The method of manufacturing a cell according to claim 12, in which the laser beam is directed perpendicularly to the surface of the washer.

14. The method of manufacturing a cell according to one of claims 12 to 13, in which the terminal secured by laser welding is the positive terminal.

15. The method of manufacturing a cell according to one of claims 12 to 14, in which the cell is cylindrical and of the lithium ion type.

16. The method of manufacturing a cell according to claim 12 in which a second terminal (7) is secured by crimping comprising the steps consisting in:
- forming an opening through the wall;
- placing at least one gasket (8) around the opening in the wall;
- placing a bearing washer (28) on the gasket;
- inserting the terminal through the washer and the at least one gasket; and
- securing the terminal by crimping with axial displacement of material (31).

17. The method of manufacturing a cell according to claim 16, in which a portion of the surface of the gasket adjacent to the wall presents a channel (32) suitable for engaging in the wall during crimping.

18. The method of manufacturing a cell according to one of claims 16 or 17, in which the second terminal secured by crimping is the negative terminal.

19. The method of manufacturing a cell according to one of claims 16 to 18, in which the gasket is made of polyetherimide.

20. The method of manufacturing a cell according to one of claims 16 to 19, in which the cell is cylindrical and of the lithium ion type.
